# EUROPEAN PATENT APPLICATION

(11) **EP 2 597 501 A1**
(43) Date of publication of application: **29.05.2013**
(21) Application number: 11009253.3
(22) Date of filing: 22.11.2011
(51) Int. Cl.: G02B 6/44, H02G 15/013

(54) **Cable build-up device and cable closure system**

(71) Applicant: Tyco Electronics Raychem BVBA, 3010 Kessel-Lo (BE)
(72) Inventor: Vastmans, Kristof, 3370 Boutersem (BE); Modest Willy Bryon, Roel, 3200 Aarschot (BE); Cornelissen, Kurt, 2235 Hulshout (BE)
(74) Representative: Grünecker, Kinkeldey, Stockmair & Schwanhäusser

(57) **Abstract**

The present invention relates to a cable build-up device for preventing a damage of a cable guided through a cable opening of a cable closure system, and to a cable closure system comprising such a cable build-up device. The cable build-up device (1; 100) comprises a housing (10) adapted to be arranged in the cable opening of the cable closure system and providing a tunnel (12) for passing therethrough at least one cable (3); and a sealing material (2) for sealingly encompassing the at least one cable (3) in the tunnel (12). The housing (10) comprises a first partial cylindrical shell (20) and a second partial cylindrical shell (40) with inner surfaces (28, 48) forming a surface defining the tunnel (12), wherein said first (20) and second partial cylindrical shells (40) are adapted to be connected to each other.

## Description

The present invention relates to a cable build-up device for a cable opening formed by a cable seal of a cable closure system.

In the technical field of telecommunication technology, specifically in the field of last-mile telecommunication, such as Fiber-to-the-Home (FTTH) or the like, to which field the present invention preferably relates, cable closure systems are conventionally used for organizing optical fiber cables terminating therein. Specifically, the cable closure system comprises a closure housing forming an opening through which a cable is guided to an inside of the closure housing or to an outside thereof. The opening is generally adapted to receive a cable seal which forms a cable seal opening for sealingly guiding the cable through the opening of the closure housing. The combination of the closure housing opening with the cable seal received therein is regarded as a cable opening unless anything different is described.

An afore-described cable closure system is basically disclosed, for instance, by US 6,533,472 B1 or US 5,835,658 A, wherein the closure housing associated with the cable closure system provides a plurality of cable openings, each of which is adapted to receive and to sealingly guide a cable into or out of the closure housing. The closure housing comprises at least two closure housing halves for forming the closure housing opening therebetween, wherein the cable seal is secured in the closure housing opening by the closure housing halves. The closure housing halves are connectable to each other by means of screws. In the connected state of the closure housing halves, a predetermined pressure is applied through the cable seal onto the cable. The cable seal is an elastomeric grommet made of mastic or silicone, thereby providing a water-tight sealing property.

US 5,675,124 A discloses another solution for a cable closure system, which comprises a closure housing providing at its longitudinal end a plurality of closure housing openings for receiving and guiding therethrough a plurality of cables. The closure housing opening is formed by two closure housing parts securable against each other by means of clamping. Each closure housing opening is provided with a grommet made from silicone rubber, polyurethane or the like, wherein the grommet is formed by individual hermaphroditic halves providing a series of webs extending in longitudinal direction of the closure housing opening. Said series of webs are configured to provide a channel in the longitudinal direction of the opening, which channel forms the cable seal opening through which the cable is passed and which channel is conical, so that the channel has a smaller diameter at the center than at the opening, wherein a predetermined space is provided between adjacent webs. In the closed state, the closure housing parts apply a predetermined pressure on the cable.

From US 6,226,434 B1, a cable closure system is known, which comprises a closure housing cooperating with an end plate made of plate-like rubber material, such as EPDM or the like, which end plate provides at least one cable opening. For reliably sealing a cable received and guided through the cable opening, an adaptor is used, which adaptor is attached to the cable at a portion of length to be received in the cable opening and which adaptor is then placed in the cable opening for sealingly guiding the cable into the closure housing.

The different conventional solutions for sealingly guiding a cable through a cable opening cannot reliably prevent a deformation of the cable received in the cable opening due to pressure applied on the cable in the assembled state of the cable closure housing, i.e. of the cable closure system. In this context, it is pointed out that in the field of last-mile telecommunications, the cable is normally an optical fiber cable comprising at least an outer cable jacket surrounding at least one optical fiber element for protecting it against environmental influences. Accordingly, in case the outer cable jacket is deformed due to pressure applied thereon by the closure housing, a damage of the optical fiber element may also occur, resulting in a remarkable signal transmission loss of the optical fiber cable..

It is an object of the present invention to provide means dealing with the above mentioned problems. Specifically, the present invention aims to provide a cable build-up device, preferably for an optical fiber cable, which cable build-up device is adapted to reduce the risk of deformation of the optical fibre cable received and guided by a cable opening of a cable closure system while providing sufficient sealing of the cable in the opening. A further object of the present invention is to provide a cable closure system using such a cable build-up device.

According to the first aspect of the present invention, the above object is solved by a cable build-up device having the features as specified in claim 1. The cable build-up device comprises a housing adapted to be arranged in the cable opening of the cable closure system and which provides a tunnel for passing therethrough at least one cable to be received by the cable closure system. The housing is preferably formed of an injection-molded plastic material and is configured to absorb a pressure normally applied by the closure housing on the cable in its received state, i.e. in the state, in which the cable is guided through the cable opening in or out of the cable closure housing. Further, preferably, the housing is adapted to withstand a pressure of at least 20kPa. As a matter of course, in case of need, the housing may be configured to withstand a higher pressure. The pressure withstand can be influenced by properly selecting a material composition for making the housing and/or by the process of manufacturing the housing e.g. by an injection-molding of plastic material, wherein a respective material composition and a method are commonly known in the respective technical field of forming injection-molded plastic material parts.

As described above, the housing of the cable build-up device provides a tunnel for passing therethrough the at least one cable. The tunnel may have any cross-sectional shape suitable to receive and guide therethrough at least one cable. For sealingly guiding the cable through the cable opening, the housing cooperates with a sealing material, which is configured to sealingly encompass the at least one cable in the tunnel. In other words, the sealing material completely surrounds the at least one cable in its circumferential direction to form a barrier layer between the outer surface of the at least one cable and the inner surface of the housing, which inner surface defines the tunnel, wherein the barrier layer is adapted to prevent an intrusion of moisture, dust or the like.

The tunnel preferably has an inner diameter corresponding to an outer diameter of the at least one cable with the sealing material surrounding the cable. As the sealing material of the invention has a specific flowability, the diameter of the tunnel may preferably be slightly smaller than the outer diameter of the at least one cable with the sealing material surrounding the cable. Thereby, specific pressure can be applied on the sealing material for improving the sealing property of the cable build-up device. However, the pressure applied on the sealing material due to said slightly smaller diameter of the tunnel is preferably to be set smaller than a pressure conventionally applied by a closure housing on a cable received in the cable opening thereof. The diameter of the tunnel may preferably be set dependent on a pressure absorbing capacity of a cable outer jacket of the at least one cable to be received and guided through the tunnel, wherein said pressure absorbing capacity of the outer cable jacket refers to a press hold value at which deformation of the outer cable jacket will start.

According to the above preferred configuration of the housing, the pressure distribution normally applied on a received and guided cable can be reduced, thereby preventing a deformation of at least of the signal transmitting element, e.g. the optical fibre element of the cable in comparison with conventional cable closure systems.

In a further preferred embodiment of the present invention, the sealing material is a gel material having a hardness in the range of 20g to 120g and, further, preferably in the range of 20g to 60g. Based on said preferred hardness, the gel material is optimized to prevent hindering a mounting of the cable build-up device on the cable and to prevent a pushing of the gel material out of the housing. In other words, in case the gel material has a hardness higher than the preferred upper limit of 80g, closure of the housing will most likely result in a pressure force applied on the cable, which may deform the outer cable jacket. In case the hardness is lower than 20g, the flowability of the gel material is increased. Thus, a major amount of the gel material may be pushed out of the housing, thereby negatively affecting the sealing capability of the cable build-up device.

The gel material of the present invention is an incompressible medium. For thorough sealing within the housing, a slight excess of sealing material as mentioned above is advantageous. As a consequence, the volume provided within the tunnel for distribution of the gel material upon closure of the housing is preferably slightly less than the volume of the gel material received in an annular gap between the cable and the inner peripheral surface of the housing surrounding the cable. For thorough closure and sealing, a preferred embodiment of the present invention proposes at least one sealing material squeeze out opening provided in at least one of the first and second partial cylindrical shells or at an interface between the first and the second partial cylindrical shell. The at least one sealing material squeeze out opening is preferably arranged in a middle area as seen in longitudinal, i.e. axial direction of the housing, i.e. the cable. This design provision is advantageous, as the radial pressure of compressed material encapsulated within the housing when closing the same is higher than the axial pressure, which axial pressure may be reduced by sealing material being squeezed out of the housing through a possible gap between the outer circumferential surface of the cable and terminal end sides of the housing provided at opposed longitudinal ends thereof. Multiple sealing material squeeze out openings may be distributed in circumferential direction in a mid-region of the housing. Preferably, the squeeze out opening has a certain axial extension, which can most appropriately be realized by a gap at the interface between the two partial cylindrical shells, which gap will most preferably be provided between the two interfaces of the partial cylindrical shells and extending over a axial length of the total interface of preferably at least 60 %. Additionally or alternatively, plural sealing material squeeze out openings received within the partial cylindrical shell may be provided next to each other in longitudinal direction. The opening shall have an effective diameter for the sealing material to be squeezed out of at least 1 mm. In case of a gap at the interface, this effective diameter corresponds with the distance of opposing end sides of the partial cylindrical shells being provided opposite to each other. Those dimensions are to be obeyed at the gap opening into the annular space between the inner peripheral surface of the housing surrounding the cable. From this point, the gap may increase with increasing radial distance. The actual dimensions of a tolerable gap may vary with the hardness of the gel sealing material, i.e. it's specific resistance to flow.

According to a further preferred embodiment as specified in claim 3, the sealing material may properly be selected dependent on the material used for the outer cable jacket. For example, in case the outer cable jacket would be a low smoke zero halogen (LSZH) cable also known as low smoke halogen free (LSHF) cable, low smoke zero halogen (LS0H) cable, or zero halogen low smoke (0HLS) cable, thermoplastic gel may possibly negatively affect the outer cable jacket material due to chemical reaction therewith. Therefore, in combination with said aforementioned cable types, a thermoset gel, such as a dry silicone gel is preferred. However, in case the outer cable jacket would be e.g. polyethylene, then thermoplastic gel can preferably also be used.

In a further preferred embodiment of the present invention, the sealing material is a dry silicone gel according to any one of claims 5 to 7. Due to the respective ingredients specified by said claims, respectively, e.g. the chain structure and mole fraction of hydrides of the gel material can be influenced to particularly adapt the gel properties such as, for instance, hardness, tensile strength, ultimate elongation, toughness and Young's modulus.

Further preferably, a gel material developed and distributed by the applicant under the name "Raychem PowerGel" is preferred as a sealing material for the cable build-up device.

In a further preferred embodiment of the present invention according to claim 8, the adhesion between the gel material and the housing can be further improved.

Preferred embodiments of the housing made of the first partial cylindrical shell and the second partial cylindrical shell are particularly defined in dependent claims 9 to 10.

According to claim 9, in which the preferred embodiment of the cable build-up device comprises first and second partial cylindrical shells forming a continuous circumferential surface for defining the tunnel, a sufficient contact surface for the sealing material can be provided between the cable to be passed through the tunnel and the continuous circumferential surface of the housing, thereby further improving the sealing property of the cable build-up device. Due to the remaining features of claim 9, the first and second partial cylindrical shells can be simply connected to each other. Preferably, the first partial cylindrical shell and the second partial cylindrical shell can be connected by simply snapping against each other.

Further preferably, as defined in claim 10, the first partial cylindrical shell and the second partial cylindrical shell provide a meshing configuration, wherein tooth-shaped recesses forming flanks which extend in a direction perpendicular to the fibre direction and which form abutment faces for the first partial cylindrical shell and the second partial cylindrical shell to lock the same against each other in the fibre direction. Accordingly, the features referring to the continuous circumferential surface in combination with the features of dependent claim 9 refer to first and second partial cylindrical shells which, in combination with the sealing material, are adapted to hold the at least one received cable by means of a form closure, thereby further providing a strain relief function.

The preferred embodiment according to claim 11 further improves the sealing property of the cable build-up device and, additionally, further helps to prevent an outcome of the sealing material out of the cable build-up device. Preferably, an inner diameter of the tunnel opening provided by the duct is adapted to correspond to an outer diameter of the cable to be received by the cable build-up device. Further preferably, both of the first partial cylindrical shell and the second partial cylindrical shell are provided with a terminal section. Thereby, the aforesaid effects can be further improved. Additionally, a displacement between the first and second partial cylindrical shells at least in longitudinal direction of the cable build-up device can reliably be prevented. Particularly, the first and second partial cylindrical shell are adapted to abut against an inner surface of the terminal section, wherein the inner surfaces of the terminal sections oppose each other with the tunnel arranged therebetween. Further particularly, the tunnel has a diameter larger than a diameter of the tunnel opening, wherein an outer surface of the terminal section including the tunnel opening merges with an outer surface of the first and second partial cylindrical shells defining the tunnel. Accordingly, a basically tube-shaped cable build-up device can be provided, wherein a longitudinal length of the cable build-up device is preferably adapted to be larger than a longitudinal length of the cable opening in order to prevent that the closure housing may apply a pressure directly on the cable.

The preferred embodiment of the present invention according to claim 12 and further preferably according to claim 13 further enhances a strain relief function of the cable build-up device. Moreover, the cable build-up device can be at least reliably prevented from slipping out of the cable opening when a pulling force is imposed to the cable received by the cable build-up device. Additionally or alternatively, a rotational motion of the cable build-up device can be inhibited, thereby preventing a twist of the cable inside the cable closure system.

According to the preferred embodiment, the housing may withstand at least a pressure applied by a cable seal on a cable received in the cable opening of the cable closure system in radial direction of at least 20 kPa.

According to a further aspect of the present invention, a cable closure system as defined in claim 14 is proposed, which is capable of reliably preventing a damage of a cable guided through a cable opening of the cable closure system toward an inside or outside thereof.

The invention will be described herein after in greater detail and in an exemplary manner by means of advantageous embodiments of the invention and with reference to the drawing. The described embodiments are only possible configurations in which, however, the individual features as described above can be provided independently of one another or can be omitted. In the drawings:
- Figure 1: is a schematic cross-sectional view of a cable build-up device according to one embodiment;
- Figure 2: is a schematic perspective view of the cable build-up device as shown in Figure 1;
- Figure 3: is a schematic perspective exploded view of the cable build-up device as shown in Figures 1 and 2, respectively;
- Figure 4: is a schematic perspective view of a cable build-up device according to a further embodiment;
- Figure 5: is a schematic perspective exploded view of the cable build-up device as shown in Figure 4;
- Figure 6: a cross-sectional view taken along the line VI-VI in Figure 2 and
- Figure 7: a cross-sectional view taken along the line VII-VII in Figure 2.

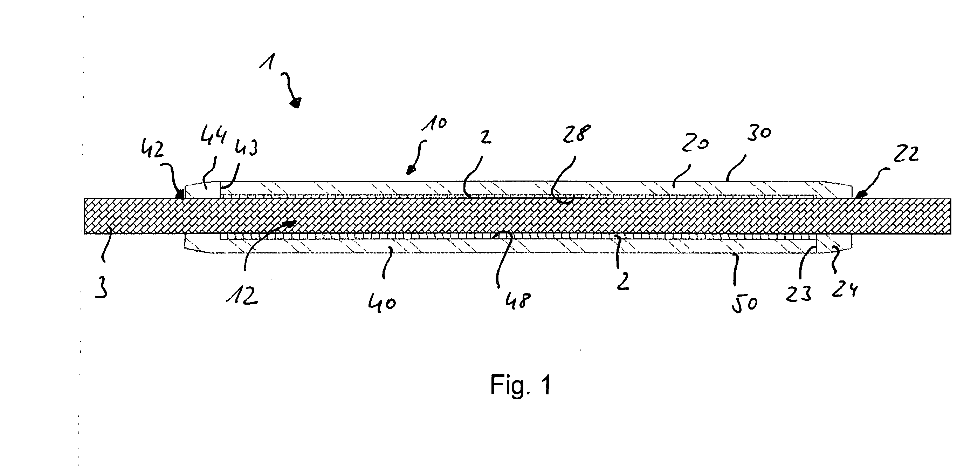

First, an embodiment of the cable build-up device 1 configured according to the invention will be described with reference to Figure 1, which shows a schematic cross-sectional view of the cable build-up device 1.

A housing 10 of the cable build-up device 1 forms a tunnel 12 for guiding therethrough at least one cable 3. The housing 10 is basically formed like a torpedo and comprises a first partial cylindrical shell 20 and a second partial cylindrical shell 40, each comprising terminal sections 24, 44, each arranged at a longitudinal end of the cable build-up device 1, respectively. The terminal section 24 of the first partial cylindrical shell 20 provides an inner surface 23 extending normal to the longitudinal axis of the housing 10 for abutting against a longitudinal end of the second partial cylindrical shell 40. The terminal section 44 of the second partial cylindrical shell 40 provides an inner surface 43 for abutting against a longitudinal end of the first partial cylindrical shell 20. Each of the terminal sections 24, 44 is substantially formed as a truncated cone, wherein the larger diameter portion of the terminal section 24 of the first partial cylindrical shell 20 merges with the outer circumferential surface 50 of the second partial cylindrical shell 40, and wherein the larger diameter portion of the terminal section 44 of the second partial cylindrical shell 40 merges with the outer circumferential surface 30 of the first partial cylindrical shell 20.

Each of the terminal sections 24, 44 provides a tunnel opening 22, 42 ranging from the smaller diameter side toward the larger diameter side thereof, thereby forming a duct therebetween, which duct is adapted to guide the cable 3 through the terminal section 24, 44. The tunnel openings 22, 42 communicates with the tunnel 12 for guiding the cable 3 toward an inside of the cable build-up device 1 or toward an outside thereof. A diameter of the tunnel openings 22, 42 corresponds substantially to an outer diameter of the cable 3 to provide a sealing property at the respective terminal section 24, 44. The diameter of the tunnel openings 22, 42 is larger than the diameter of the tunnel 12, wherein the tunnel openings 22, 42 and the tunnel 12 are coaxially arranged. Thereby, the inner surfaces 23, 43 of the terminal sections 24, 44, which limit the tunnel 12 in longitudinal direction of the cable build-up device 1 by abutting against the longitudinal ends of the first and second partial cylindrical shells 20, 40, respectively, provide an abutment face for a sealing material 2 provided in the tunnel 12. The sealing material 2 is adhered by means of a primer on inner surfaces 28, 48 of the first and second partial cylindrical shells 20, 40, wherein the inner surfaces 28, 48 form the tunnel 12 in the assembled state of the cable build-up device 1. Usually, the sections of the sealing material 2 are attached to the inner circumference of each shell 20, 40, which sections provide a circumferential seal closure for the cable 3 after the shells 20, 40 are attached to each other. The sealing material 2 is provided for sealingly encompassing the cable 3 in the tunnel 12 to sealingly guide the cable 3 through the tunnel 12. Particularly, the inner surfaces 28, 48 are formed by fairly thin walls of the first and second partial cylindrical shells 20, 40, which are configured to circumferentially surround the cable 3.

According to the above configuration, the cable 3 can sealingly be guided through the tunnel 12, where tunnel openings 22, 42 provide a flow resistance for the sealing material 2. The sealing material 2 used in this preferred embodiment is the Raychem PowerGel.

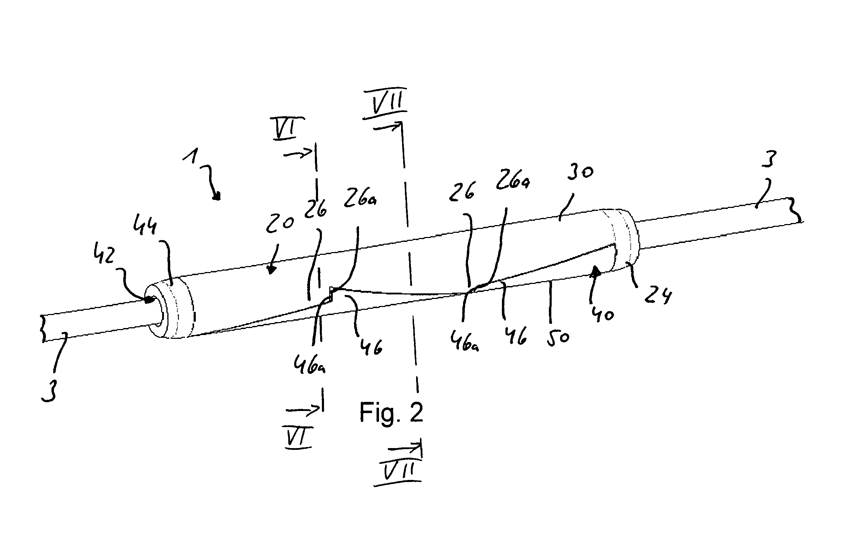

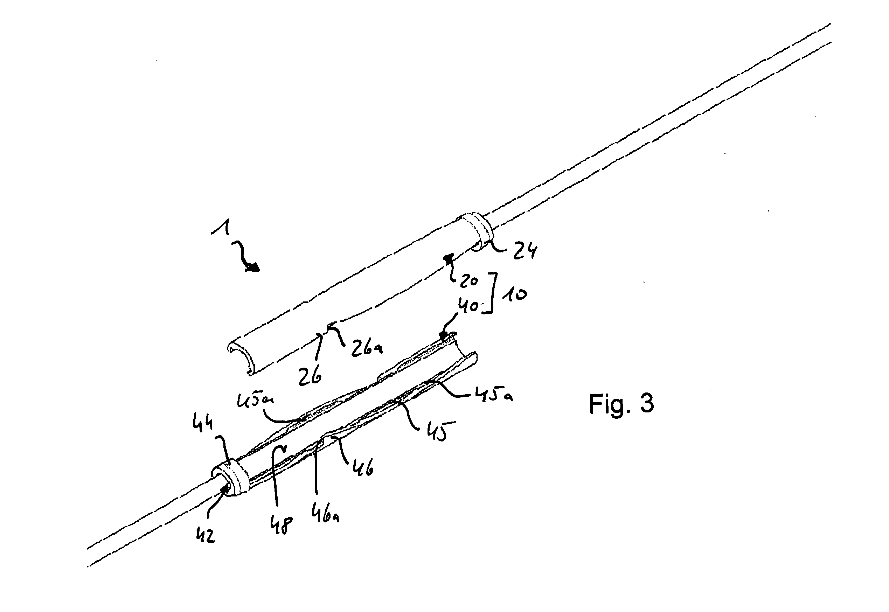

Figure 2 is a schematic perspective view of the cable build-up device 1 as shown in Figure 1, and Figure 3 is a schematic perspective exploded view of said cable build-up device 1, which elucidates the composition of the housing 10 of the first and second partial cylindrical shells 20, 40. The housing 10 is made of elastically deformable material, for example, a thermoplastic. The first and second partial cylindrical shells 20, 40 are identical such that the respective shells 20, 40 can be made in the same injection moulding mould.

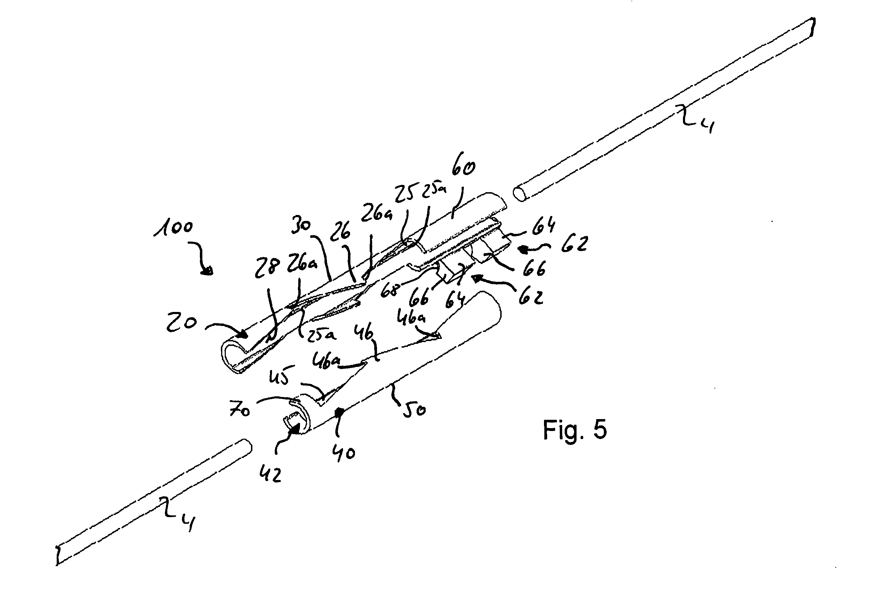

Each of the first and second partial cylindrical shells 20, 40 has a semicircular core section 25, 45 (Figures 3 and 5). In the assembled state of the cable build-up device 1 (Figures 3, 6 and 7), both semicircular core sections 25, 45 oppose each other with an inner surface 25a, 45a extending in longitudinal direction of the housing 10 and in a plane containing a central axis of the housing 10. Over a length of the partial cylindrical shell 20, 40 without its terminal section 24, 44, said semicircular core section 25, 45 is partially projected and partially exposed. At locations, where the semicircular core section 25, 45 is exposed, the partial cylindrical shell 20, 40 without its terminal section 24, 44 has a circumferential extension of less than 180°, while a larger circumferential extension is a portion where the semicircular core section 25, 45 is projected by the partial cylindrical shell 20, 40. For this, the partial cylindrical shell 20, 40 extends over an angle of more than 180°. The smallest extension of the partial cylindrical shell 20, 40 is approximately 140°, while the maximum extension is approximately 220°. Such maximum extension is provided by tooth-like projections 26, 46 forming complementary shells.

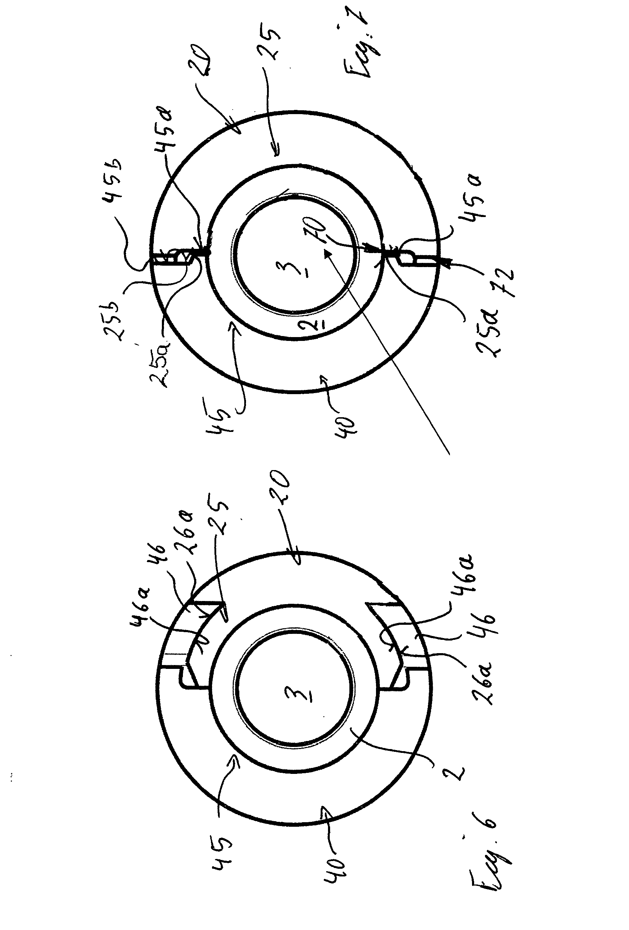

At the smallest extension of the partial cylindrical shell 20 in circumferential direction, the same provides an abutment face 26a. At the same position, the other partial cylindrical shell 40 has the maximum circumferential extension, thereby defining a complementary abutment face 46a. Those abutment faces 26a, 46a lie against each other with the partial cylindrical shell 40 having the maximum circumferential extension defining a snapping element lying against the other partial cylindrical shell 20 with minimum circumferential extension. Respective snapping elements will in particular abut the semicircular core section 25 of the respective other partial cylindrical shell 20 (cp. Figure 6). Due to this snapping, both partial cylindrical shells 20, 40 are secured and safely held against each other with a certain degree of radial pressing leading to abutment of the two partial cylindrical shells 20, 40 at the inner surfaces 25a, 45a of the semicircular core section 25, 45.

Due to this specific design of each of the first and second partial cylindrical shells 20, 40, the same can be snapped against each other by connecting said first and second partial cylindrical shells 20, 40 in radial direction. Such snapping will provide interlocking of said shells 20, 40 in radial direction. Further, due to cooperation of the complementary shells 26, 46, there is an interlocking between the first and second partial cylindrical shells 20, 40, which provides form fit in longitudinal direction of the cable build-up device, i.e. in guiding direction of the cable 3.

For assembling the cable build-up device 1 shown in Figures 1 to 3, the sealing material 2 is adhered to the inner surfaces 28, 48 of the first and second partial cylindrical shells 20, 40, respectively, by means of a primer. Only as a preferable example, the primer may consist of a mixture of 98 % Arcosolv PTV (from the company Lyondell Basell), 1 % AKT881 (from company Gelest) and 1 % Y-11597 (from company Momentive). As a further example, the sealing material may have a hardness of 42 Gr, tensile strength of 0,0012 MPa, ultimate elongation of 1366 %, toughness of 0,1 MJ/m³ and Young's modulus of 0,091 kPa. The sealing material 2 is applied when preparing the two partial cylindrical shells 20, 40, i.e. delivered for mounting with such sealing material 2 adhered to the cylindrical shells 20, 40.

For mounting the cable 3, the same is inserted through one of the tunnel openings 22, 42 to extend toward an inside of the cable build-up device 1 and then pushed through the other tunnel opening of the tunnel openings 22, 42 toward an outside of the cable build-up device 1. Subsequently, the first and second partial cylindrical shells 20, 40 are connected to each other basically from a radial direction, wherein the cable 3 is slightly pulled to tighten the cable 3 in the connected state of the first and second partial cylindrical shells 20, 40. Thereafter, the cable build-up device 1 with the cable 3 is mounted in the cable opening of the cable closure system. While the embodiment of Figures 1 through 3 has two separate partial cylindrical shells 20, 40, the same can be provided with a hinge in between, i.e. as a unitary element. Such hinge can be formed by injection moulding the two partial shells 20, 40 as a film hinge element. With such a unitary housing, assembly of the cable 3 may be facilitated.

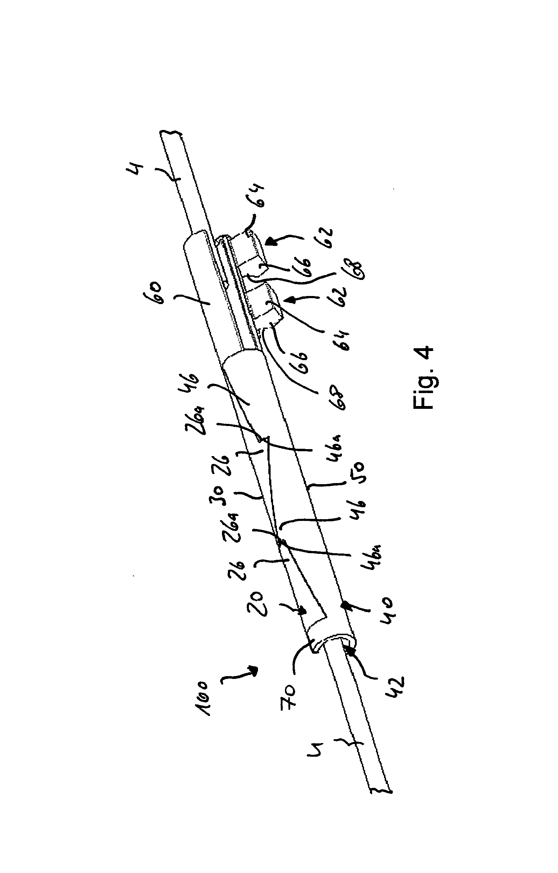

Figure 4 shows a schematic perspective view of a cable build-up device 100 according to a further preferred embodiment of the present invention. Figure 5 shows a schematic perspective exploded view of said cable build-up device 100. Similar or identical parts or portions of the cable build-up device 100 with respect to the cable build-up device 1 shown in Figures 1 to 3 are identified by identical reference signs, respectively. Accordingly, a detailed description of the parts already described above is omitted herewith by reference to the above description.

The cable build-up device 100 shown in Figures 4 and 5 differs from the above-described cable build-up device 1 basically by the configuration of terminal sections 60, 70 provided at longitudinal ends of the first and second partial cylindrical shells 20, 40, respectively.

The remaining parts of the first and second partial cylindrical shells 20, 40 are similar to the corresponding parts of the first and second partial cylindrical shells 20, 40, descried with reference to the cable build-up device 1.

As can be particularly seen in Figures 4 and 5, the terminal section 60 of the first partial cylindrical shell 20 is cross-sectionally C-shaped and has a length in longitudinal direction of the first partial cylindrical shell 20 adapted to support a pair of moving preventing flanges 62 provided on an outer surface 30 of terminal section 60 and protruding said outer surface 30 in radial direction thereof. Each of said moving preventing flanges 62 provides an abutment face 64 extending in longitudinal direction of the first partial cylindrical shell 20 so as to basically direct in circumferential direction thereof. Moreover, said moving preventing flanges 62 have a second abutment face 66, extending from said first abutment face 64 in transverse direction thereto so as to direct in longitudinal direction of the first partial cylindrical shell 20. Furthermore, each of said moving preventing flanges 62 merges with the outer surface 30 of the terminal section 60 by a quadrant circular section 68. The terminal section 60 in combination with the pair of moving preventing flanges 62 constitute holding means 60 adapted to cooperate, in a state, in which the cable build-up device is mounted in the cable opening of the cable closure system, with the cable closure system to prevent axial movement of the cable build-up device 100 in longitudinal direction of the housing 10 and to prevent rotational movement of said cable build-up device 100 in circumferential direction thereof. In particular, at least the first abutment face 64 is adapted to engage associated rotation stopping movement means provided with the cable closure system to prevent rotational movement. By providing the quadrant circular section 68, a similar effect can be achieved. The second abutment face 66 is adapted to engage an associated axial stopping movement means provided with the cable closure system. For example, the axial moving stopping means may be provided by a surface surrounding and defining the cable opening of the cable closure system. Said surface may be provided inside or outside of the cable closure system. The cable build-up device 1 is to be arranged in the cable opening of the cable closure system, respectively. In other words, the terminal section 60 with the flanges 62 is to be arranged at the side of the cable opening where the movement stopping means are provided. As a matter of course, the cable build-up device 100 can be provided with at least one of the moving preventing flanges comprising at least one of the first and second abutment faces for preventing an axial or rotational movement of the cable build-up device 100 in a mounted state thereof.

Furthermore, the terminal section 60 does not necessarily need to be of a C-shape. Alternatively, a U-shape or a V-shape or a ring-shape may be feasible. The main aspect to be considered is the insertion of the cable or the tube 4 in the terminal section 60. By means of a C-, U- or V-shape, the cable or the tube 4 can be mounted in the terminal section 60 from a radial direction, wherein, in case, the terminal section 60 is of a ring-shape, the cable or the tube 4 is to be mounted from an axial direction. The tube 4 is adapted to guide a cable, which is not shown, toward an inside of the cable build-up device and/or toward an outside thereof. As a matter of course, only one tube 4 may be provided with the cable build-up device. For this, the C-ring shaped terminal section 70 of the second partial cylindrical shell 40 as shown in Figures 4 and 5 may be alternatively formed similar to the terminal section 44, described with reference to the cable build-up device 1 shown in Figures 1 to 3. Further alternatively, the terminal section 70 may have a configuration similar to the opposing terminal section 60.

Figures 6 and 7 show cross-sectional views along the line VI-VI and VII-VII, respectively, in Figure 2. Figure 6 is a cross-sectional view, which cuts through a gap between the axial end face of the snapping element of the complementary shell 46. The cross-sectional representation according to Figure 7 is taken in a mid-area between two maximal circumferential extensions of the two partial cylindrical shells 20, 40. At this position, the inner surface 25a, 45a provided by the two partial cylindrical shells 20, 40 is essentially level with an outer surface 25b, 45b of the partial cylindrical shells 20, 40.

At the location of the snapping, i.e. abutment of the inner abutment face 46a of the complementary shell 46 against the outer abutment face 26a of the complementary shell 26 and due to a compression force generated by such snapping, the inner surfaces 25a, 45a are pressed against each other to thereby provide a gapless abutment of those inner surfaces. As a consequence, the inner circumferential surface of the tunnel 12 provided by the inner surfaces 28, 48 does not have a gap when seen in circumferential direction in Figure 6.

Figure 7 shows a different constitution, according to which the inner surfaces 25a, 45a defining the interface between the two partial cylindrical shells 20, 40 do not abut each other. Instead, a sealing material squeeze out gap 70 is defined, which terminates into an annular space between the cable 3 and the inner surfaces 28, 48 of the partial cylindrical shells 20, 40 at a radial inward end of said gap 70. The radial outer end of the gap 70 terminates within the housing 10 into an outer gap 72 defined between opposite outer surfaces 25b, 45b of the complementary shells 20, 40 extending essentially in longitudinal direction of the housing 10, i.e. the cable 3. This outer gap 72 has a larger width than the sealing material squeeze out gap 70.

Upon closure of the housing 10 and with a desired excess of sealing material 2 contained within the annular gap, the sealing material 2 is compressed and forced to be partially squeezed out through the sealing material squeeze out gap 70. The size of the gap is to be adapted to flowability of the sealing material 2, i.e. the hardness thereof to allow a residual pressure to be generated within the annular space. The amount of the sealing material 2 is preferably chosen such that the same will be sufficient to be squeezed out through all sealing material squeeze out gaps 70 provided. Thus, at the end of the closing step, the sealing material can be seen as essentially two continuous lines extending essentially in longitudinal direction on the outer circumferential surface of the housing 10, except the terminal sections 24, 44.

### Reference list

- 1; 100: cable build-up device
- 2: sealing material
- 3: cable
- 4: tube
- 10: housing
- 12: tunnel
- 20: first partial cylindrical shell
- 22, 42: tunnel opening
- 23, 43: terminal section inner surface
- 24, 44, 70: terminal section
- 25, 45: semicircular core section
- 25a, 45a: inner surface of the semicircular core section
- 25b, 45b: outer surface
- 26, 46: complementary shell
- 26a, 46a: abutment face of the complementary shell
- 28, 48: inner surface of the partial cylindrical shell
- 30, 50: outer surface of the partial cylindrical shell
- 40: second partial cylindrical shell
- 60: holding means
- 62: flange
- 64: first abutment face of the flange
- 66: second abutment face of the flange
- 68: quadrant circular section
- 70: sealing material squeeze out opening
- 72: outer gap

## Claims

1. A cable build-up device (1; 100) for a cable opening formed by a cable seal of a cable closure system, the cable build-up device (1; 100) comprising a housing (10) adapted to be arranged in the cable opening of the cable closure system and providing a tunnel (12) for passing therethrough at least one cable (3); and a sealing material (2) for sealingly encompassing the at least one cable (3) in the tunnel (12), wherein
the housing (10) comprises a first partial cylindrical shell (20) and a second partial cylindrical shell (40), with inner surfaces (28, 48) forming a surface defining the tunnel (12), wherein said first (20) and second partial cylindrical shells (40) are adapted to be connected to each other.

2. The cable build-up device (1; 100) according to claim 1, **characterized in that** the sealing material (2) is a gel material having a hardness in the range of 20g to 120g.

3. The cable build-up device (1; 100) according to claim 1 or 2, **characterized by at** least one sealing material squeeze out opening (70) provided in at least one of the first and the second partial cylindrical shells (20, 40) or at an interface (25a, 45a) between the first and the second partial cylindrical shells (20, 40).

4. The cable build-up device (1; 100) according to claim 1 or 2, **characterized in that** the sealing material (2) is selected from the group consisting of thermoplastic gel, polyurethane gel and thermoset gel.

5. The cable build-up device (1; 100) according to anyone of the preceding claims, **characterized in that** the sealing material (2) is a dry silicone gel comprising a base polymer having a vinyl-silicone group; a crosslinker; and a chain extender.

6. The cable build-up device (1; 100) according to claim 5, **characterized in that** the dry silicone gel further comprises at least one additive selected from the group consisting of colouring agents, adhesion promoters, stabilizers, fillers, dispersants, flow improvers, plasticizers, slip agents, toughening agents, and combinations thereof.

7. The cable build-up device (1; 100) according to claim 5 or 6, **characterized in that** the base polymer is a vinyl-terminated polydimethylsiloxane; and/or
the crosslinker is selected from the group consisting of tetrakis(dimethylsiloxy)silane, methyltris(dimethylsiloxy)silane, and combinations thereof; and/or
the chain extender is selected from the group consisting of hydride containing polydimethylsiloxane, dihydride containing siloxane, hydride terminated polydimethylsiloxane, hydride terminated polyphenylmethylsiloxane, hydride terminated polydiphenylsiloxane, functionalized terminated silicone, and combinations thereof.

8. The cable build-up device (1; 100) according to anyone of the preceding claims, **characterized in that** the sealing material (2) is adhered in the tunnel (12) on an inner surface (28, 48) of the housing (10) by means of a primer.

9. The cable build-up device (1; 100) according to anyone of the preceding claims, **characterized in that** the inner surfaces (28, 48) of the first partial cylindrical shell (20) and of the second partial cylindrical shell (40) form a continuous circumferential surface defining the tunnel (12), and said first (20) and second partial cylindrical shells (40) are adapted to be connected to each other by a hinge or by form fit means (26a, 46a) which holds the first partial cylindrical shell (20) and the second partial cylindrical shell (40) against each other in an interlocking manner.

10. The cable build-up device (1; 100) according to anyone of the preceding claims, **characterized in that** the first partial cylindrical shell (20) and the second partial cylindrical shell (40) each have complementary shells (26, 46), which are arrangeable side by side in a longitudinal direction of the housing (10), thereby radially defining the tunnel (12).

11. The cable build-up device (1) according to anyone of the preceding claims, **characterized in that** at least one of the first partial cylindrical shell (20) and the second partial cylindrical shell (40) has a terminal section (24; 44) providing a duct forming a tunnel opening (22; 42) communicating with the tunnel (12) for receiving the at least one cable (3).

12. The cable build-up device (100) according to anyone of the preceding claims, **characterized in that** the housing (10) comprises holding means (60) adapted to cooperate with the cable closure system to prevent axial movement of the cable build-up device (100) in longitudinal direction of the housing (10) or rotation of the cable build-up device (100) in circumferential direction around the tunnel (12) in a state in which the cable build-up device (1; 100) is mounted in the cable opening of the cable closure system.

13. The cable build-up device (100) according to claim 12, **characterized in that** the holding means (60) comprises a flange (62) protruding an outer surface (30; 50) of the housing (10) in radial direction thereof, wherein said flange (62) provides at least an abutment face (64; 66) extending in longitudinal direction of the housing (10) or transverse thereto.

14. A cable closure system comprising
a closure housing for organizing therein at least one cable (3), said closure housing has at least one cable opening formed by a cable seal for sealingly guiding at least one cable (3) in and/or out of the closure housing; and
a cable build-up device (1; 100) according to anyone of the preceding claims arrangeable in the sealed cable opening.
